# EUROPEAN PATENT APPLICATION

(11) **EP 3 299 594 A1**
(43) Date of publication of application: **28.03.2018**
(21) Application number: 16190696.1
(22) Date of filing: 26.09.2016
(51) Int. Cl.: F01K 23/02, F01K 23/10, F01K 25/08

(54) **AN INTEGRATED SOLAR COMBINED CYCLE AND METHOD**

(71) Applicant: Siemens Aktiengesellschaft, 80333 München (DE)
(72) Inventor: Welch, Michael, Sleaford, NG34 8BB (GB)
(74) Representative: Maier, Daniel Oliver

(57) **Abstract**

An integrated solar combined cycle power plant comprising a solar power plant and an organic Rankine cycle,
wherein the solar power plant comprises one or more solar collectors configured to heat a first working fluid flowing in a first thermal circuit,
wherein the organic Rankine cycle comprises a second thermal circuit through which a second working fluid flows, the second working fluid being an organic compound based fluid;
wherein the first thermal circuit is in thermal communication with the second thermal circuit via an intermediate heat exchanger configured to transfer heat from the first working fluid to the second working fluid; and
wherein the integrated solar combined cycle further comprises a gas turbine power plant, the exhaust gases from the gas turbine power plant being in thermal communication with an exhaust gas heat exchanger through which the first working fluid flows, the exhaust gas heat exchanger being configured to transfer heat from the gas turbine exhaust gases to the first working fluid.

## Description

### Technical field of the invention

The present disclosure relates to an integrated solar combined cycle comprising a gas turbine power plant, a solar power plant and an organic Rankine cycle power plant, in which the gas turbine power plant and solar power plant provide heat to a common thermal circuit, which in turn provides heat to the organic Rankine cycle power plant, wherein particularly, although not exclusively, the common thermal circuit and organic Rankine cycle power plant use non-aqueous working fluids.

### Background of the invention

For a conventional integrated solar thermal power plant, steam produced by a solar plant is added to steam produced from a fossil-fuelled gas turbine combined cycle plant. For example, the most efficient power plants using integrated solar combined cycle technology use fossil-fuelled gas turbines with a steam turbine bottoming cycle, and steam from the solar field is used to boost power output from the steam turbine.

However, in load following mode this often means operating the gas turbine at part load, which reduces the potential cycle efficiency achievable. Heat storage is also difficult with steam, which reduces the overall contribution of the zero CO₂ solar power to overall power plant output. Furthermore, as the most appropriate sites tor solar Thermal power are in hot, dry regions, water is a scarce resource.

### Solution according to the invention

According to an aspect of the present disclosure there is provided an integrated solar combined cycle comprising a gas turbine power plant, a solar power plant and an organic Rankine cycle power plant, in which the gas turbine power plant and solar power plant provide heat to a common thermal circuit, which in turn provides heat to the organic Rankine cycle power plant. The common thermal circuit and organic Rankine cycle power plant may use non-aqueous working fluids. The common thermal circuit and organic Rankine cycle power plant may use different working fluids.

According to a further aspect of the present disclosure there is provided an integrated solar combined cycle power plant comprising a solar power plant (such as a concentrated solar power plant) and an organic Rankine cycle,
wherein the solar power plant comprises one or more solar collectors configured to heat a first working fluid flowing in a first thermal circuit,
wherein the organic Rankine cycle comprises a second thermal circuit, through which an organic compound based second working fluid flows, and a turbo-generator in the second thermal circuit;
wherein the first thermal circuit is in thermal communication with the second thermal circuit via an intermediate heat exchanger configured to transfer heat from the first working fluid to the second working fluid; and
wherein the integrated solar combined cycle power plant further comprises a gas turbine power plant, the exhaust gases from the gas turbine power plant being in thermal communication with an exhaust gas heat exchanger through which the first working fluid flows, the exhaust gas heat exchanger being configured to transfer heat from the gas turbine exhaust gases to the first working fluid.

Advantageously, the organic Rankine cycle systems require no water. By replacing the steam generators and steam turbine from a gas turbine combined cycle plant with the exhaust gas heat exchanger and organic Rankine cycle turbo-generator, a gas turbine-based combined cycle plant can be constructed that requires no water.

The exhaust gas heat exchanger may be arranged in parallel with the solar collectors and intermediate heat exchanger within the first thermal circuit. Alternatively, the exhaust gas heat exchanger may be arranged in series with the solar collectors and intermediate heat exchanger within the first thermal circuit.

The integrated solar combined cycle power plant may further comprise a heat storage device in fluidic communication with the first thermal circuit. A thermal mass of the heat storage device may be in thermal communication (selectively or permanently) with the first working fluid so that thermal energy may be transferred from the first working fluid to the thermal mass and vice versa. The heat storage device may advantageously extend the period of power generation from the solar collectors. As a result, the amount of zero carbon electricity that may be generated as a percentage of total power plant output may be increased.

The heat storage device may be in a parallel arrangement within the first thermal circuit. Alternatively, the heat storage device may be in a series arrangement within the first thermal circuit.

The integrated solar combined cycle power plant may further comprise a plurality of gas turbine power plants. The exhaust gases from each gas turbine power plant may be in thermal communication with respective exhaust gas heat exchangers through which the first working fluid flows, the exhaust gas heat exchangers being configured to transfer heat from the gas turbine power plant exhaust gases to the first working fluid. The plurality of exhaust gas heat exchangers may be in parallel with one another within the first thermal circuit.

The integrated solar combined cycle power plant may further comprise a selectively operable supplementary boiler, e.g. configured to burn at least one of a fossil fuel and biomass. The supplementary boiler may be in thermal communication with the first thermal circuit so as to transfer heat to the first working fluid. The supplementary boil may advantageously provide further back-up to enable power generation 24 hours per day.

The intermediate heat exchanger may be configured to vaporise the second working fluid in the second thermal circuit. The organic Rankine cycle may further comprise at least one of a condenser and a pump disposed in the second thermal circuit.

The first working fluid may be non-aqueous. For example, the first working fluid may be oil based. The first working fluid may be a heat transfer fluid, such as Therminol VP-1 (RTM) heat transfer fluid.

The second working fluid may be non-aqueous. The second working fluid may comprise a refrigerant. The second working fluid may be Cyclopentane.

According to a further aspect of the present disclosure there is provided a method of operating an integrated solar combined cycle power plant comprising a solar power plant and an organic Rankine cycle, wherein the method comprises:
transferring heat from the exhaust gases of a gas turbine power plant to a first working fluid flowing in a first thermal circuit via an exhaust gas heat exchanger;
heating the first working fluid flowing in the first thermal circuit with one or more solar collectors of the solar power plant, and
transferring heat from the first thermal circuit to an organic compound based second working fluid flowing in a second thermal circuit of the organic Rankine cycle via an intermediate heat exchanger; the organic Rankine cycle comprising a turbo-generator in the second thermal circuit.

The method may further comprise selectively storing heat from the first working fluid in a heat storage device. Heat stored in the heat storage device may be subsequently transferred to the first working fluid.

The method may further comprise selectively operating a supplementary boiler configured to burn a fuel, e.g. at least one of a fossil fuel and biomass. Heat from the supplementary boiler may be transferred to the first working fluid in the first thermal circuit.

The method may further comprise selectively operating the supplementary boiler when the heat collected by the solar collectors is below a threshold rate.

Combining combined cycle gas turbine and solar Thermal power generation with organic Rankine cycle technology advantageously provides a flexible, 24 hour power generation capability with a high level of contribution from zero carbon sources (solar power) and minimal environmental impact.

Advantageously, the organic Rankine cycle offers similar full load performance and efficiency to low pressure steam systems for gas turbine combined cycle plant, but at a similar or reduced cost and system complexity, and is able to operate without the need for water. In particular, compared to a steam bottoming cycle, an organic Rankine cycle option offers the potential for lower cost due to the simplicity of the bottoming cycle and the elimination of water treatment plant, chemical dosing systems etc. It may also avoid the need for a steam generator on the solar field as the thermal oil system can be linked directly into the same thermal oil system utilized by the gas turbines for heat recovery.

Furthermore, under part-load operating conditions, the organic Ranking cycle tends to outperform steam bottoming cycles and as a result the overall part-load performance may be improved. By using twin-shaft or multi-shaft high efficiency gas turbines, part-load efficiencies may be maintained at a high level for load following mode. High efficiency gas turbines tend to have low exhaust gas temperatures that reduces their steam raising potential for combined cycle applications. However, their exhaust gas temperatures are well-suited to organic Rankine cycle technologies and high combined cycle efficiencies can be achieved. Organic Rankine cycle turbo-generators also have a very flat efficiency versus load characteristic which may help to maintain overall plant efficiency at higher levels than usually achievable with a low pressure steam bottoming cycle.

### Brief Description of the Drawings

The above mentioned attributes, features, and advantages of this invention and the manner of achieving them, will become more apparent and understandable (clear) with the following description of embodiments of the invention in conjunction with the corresponding drawings, wherein:
Figure 1 is a schematic diagram depicting an integrated solar combined cycle power plant according to an example of the present disclosure;
Figure 2 is a schematic diagram depicting an integrated solar combined cycle power plant according to an example of the present disclosure;
Figure 3 is a schematic diagram depicting an integrated solar combined cycle power plant according to an example of the present disclosure;
Figure 4 is a schematic diagram depicting an integrated solar combined cycle power plant according to an example of the present disclosure; and
Figure 5 is a flow chart depicting a method of operating an integrated solar combined cycle power plant according to an example of the present disclosure.

### Detailed description of the preferred embodiments

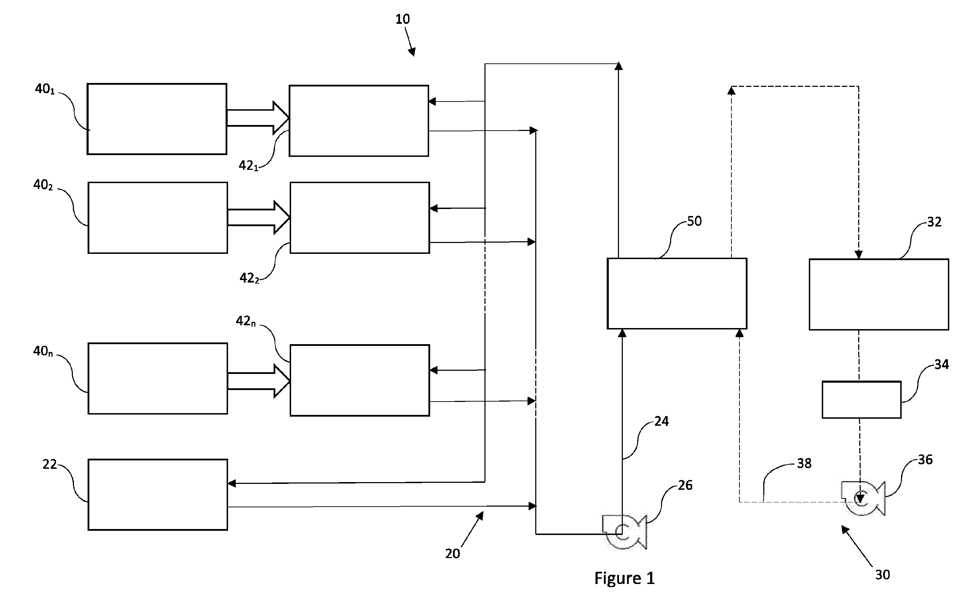

With reference to Figure 1 the present disclosure relates to an integrated solar combined cycle power plant 10 comprising a solar power plant 20, such as a concentrated solar power plant, and an organic Rankine cycle 30. The solar power plant comprises one or more solar collectors 22, which are configured to heat a first working fluid flowing in a first thermal circuit 24. The first working fluid may pass through the solar collectors 22 and may be heated by virtue of solar energy received by the solar collectors 22. For example, the collectors 22 may comprise one or more mirrors, e.g. parabolic mirrors, which focus solar energy on the first working fluid.

The integrated solar combined cycle power plant further comprises one or more gas turbine power plants 40₁, 40₂, 40ₙ. The gas turbine power plants 40 comprise electrical generators which are coupled to a turbine of the gas turbine power plants. The gas turbine power plants 40 thus may generate electricity in a conventional manner. The integrated solar combined cycle power plant 10 further comprises one or more exhaust gas heat exchangers 42₁, 42₂, 42ₙ. Exhaust gases from the gas turbine power plants 40 pass through a respective exhaust gas heat exchanger 42. The exhaust gas heat exchangers 42 are in the first thermal circuit 24 and the exhaust gas heat exchangers are configured to transfer heat from the gas turbine exhaust gases to the first working fluid. For example, the first working fluid may pass through passages in the exhaust gas heat exchangers 42 which are in thermal communication with the gas turbine exhaust gases. As depicted in Figure 1 the exhaust gas heat exchangers 42 may be arranged in parallel within the first thermal circuit 24, e.g. parallel with the solar collectors 22.

Valves may be provided in the first thermal circuit 24 to selectively permit flow of the first working fluid through one or more of the exhaust gas heat exchangers 42, in particular in the branches that connect to the exhaust has heat exchangers 42. The valves may be adjusted to prevent, modulate or permit flow of the first working fluid into a particular exhaust gas heat exchanger 42.

Figure 1 depicts the solar collectors 22 being in a series arrangement within the first thermal circuit 24. However, the solar collectors 22 may alternatively be in a parallel arrangement with the first thermal circuit 24, e.g. such that the first working fluid may bypass the solar collectors (and exhaust gas heat exchangers) if desired. Valves may also be provided between the first thermal circuit and the solar collectors 22 so that flow of the first working fluid from the first thermal circuit 24 to the solar collector 22 may be selectively prevented, modulated or permitted.

The organic Rankine cycle 30 may comprise a turbo-generator 32, a condenser 34 and a pump 36 successively disposed in a second thermal circuit 38. The integrated solar combined cycle power plant 10 further comprises an intermediate heat exchanger 50 which is disposed between the first thermal circuit 24 and the second thermal circuit 38 of the organic Rankine cycle 30. The intermediate heat exchanger 50 is configured to transfer heat from the first working fluid in the first thermal circuit 24 to a second working fluid in the second thermal circuit 48. The second working fluid flows through the second thermal circuit 38 and flows through the intermediate heat exchanger 50, the turbo generator 32, the condenser 34 and the pump 36 in succession.

The first working fluid may flow through the intermediate heat exchanger 50 and then one or more of the gas turbine power plants 40 and/or the solar connectors 22 before returning to the intermediate heat exchanger 50. The first thermal circuit 24 may further comprise a pump 26 configured to pump the first working fluid around the first thermal circuit 24. The pump 26 may be provided at any suitable location in the first thermal circuit 24.

In use, the gas turbine power plants 40 generate electricity and their exhaust gases heat the first working fluid in the exhaust gas heat exchangers 42. When there is sufficient sunlight, the solar collectors 22 may also heat the first working fluid in the first thermal circuit 24. Thermal energy from the first working fluid may be transferred to the organic Rankine cycle 30 via the intermediate heat exchanger 50. The heated second working fluid may in turn drive the turbo-generator 32, which may also generate electricity.

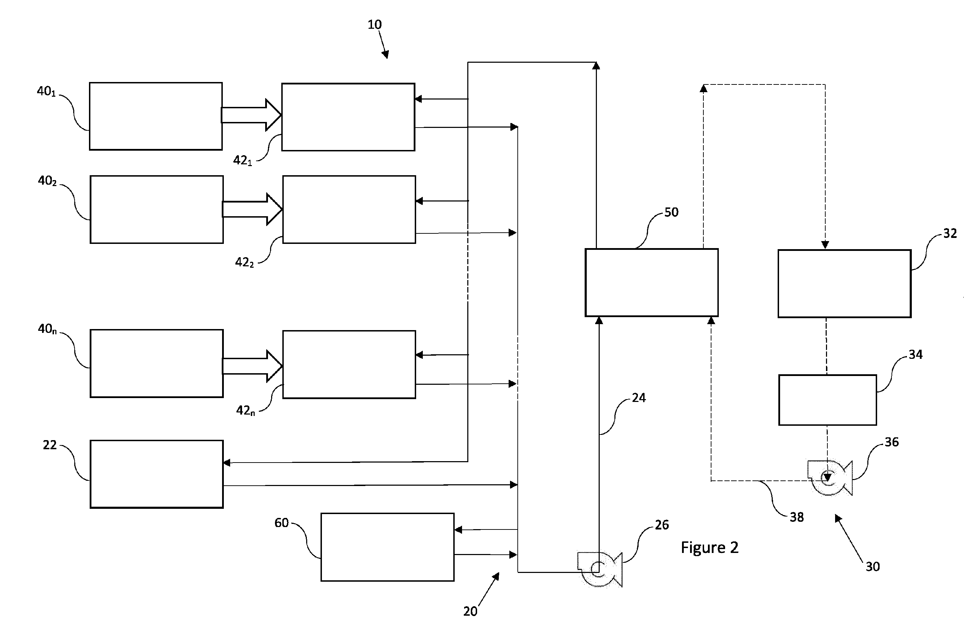

Referring now to Figure 2, the integrated solar combined cycle power plant 10 may further comprise a heat storage device 60, which may be in fluidic communication with the first thermal circuit 24. As depicted, the heat storage device 60 may be in a parallel arrangement within the first thermal circuit 24, e.g. such that flow to the heat storage device 60 may be selectively bypassed. The heat storage device 60 may comprise a thermal mass that may be in thermal communication with the first working fluid. Depending on the relative temperatures of the first working fluid and the thermal mass, the heat storage device may provide heat to or be heated by the first working fluid in the first thermal circuit 24. For example, during the day when the sun is shining, the heat storage device may absorb thermal energy from the first working fluid into the thermal mass. By contrast, at night, the thermal mass may release thermal energy into the first working fluid. The thermal mass may also release thermal energy in the first working fluid at other times, e.g. on a cloudy day. Valves may be provided between the first thermal circuit 24 and the heat storage device 60 so as to selectively permit, modulate or prevent flow of the first working fluid to the heat storage device. Although Figure 2 depicts the heat storage device 60 in a parallel arrangement with the first thermal circuit 24, it is also envisaged that the heat storage device 60 may be provided in a series arrangement.

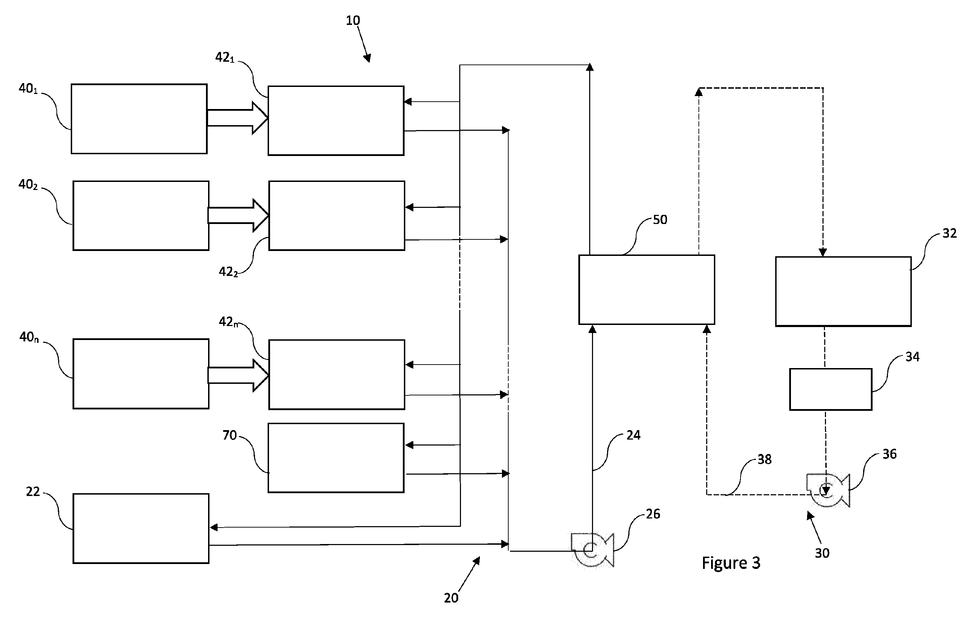

Referring now to Figure 3 the integrated solar combined cycle power plant 10 may optionally comprise a supplementary boiler 70, which may be configured to burn a fuel, such as a fossil fuel or biomass. The first working fluid from the first thermal circuit 24 may pass through the supplementary boiler 70 either in series or parallel arrangement. The supplementary boiler 70 may be selectively operated to provide additional heat to the first working fluid. For example, the supplementary boiler 70 may be operated when there is insufficient sunlight.

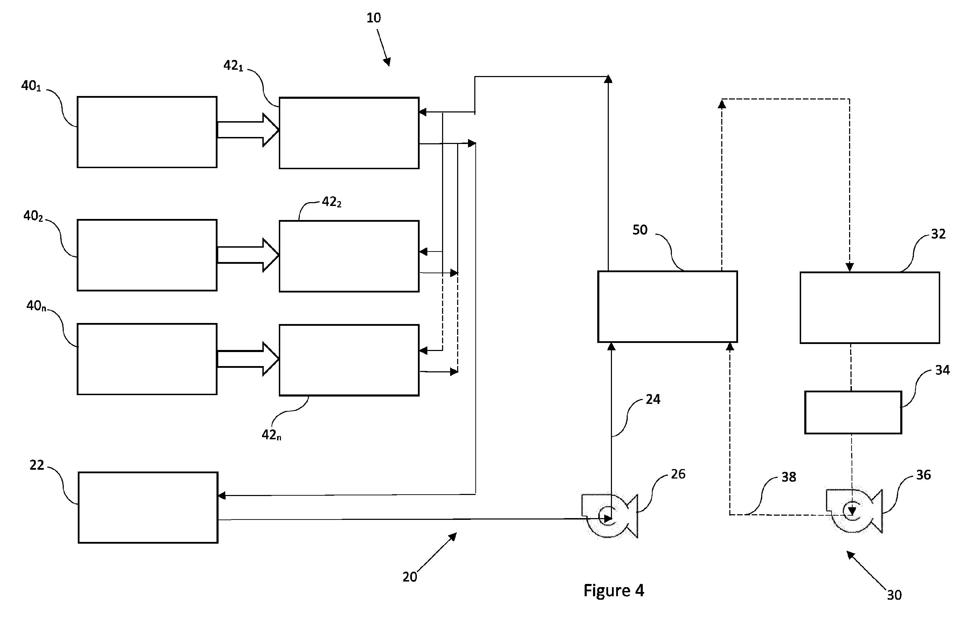

Referring now to Figure 4, the gas turbine exhaust heat exchangers 42 may be provided in a series arrangement within the first thermal circuit 24. In the case of there being more than one gas turbine exhaust heat exchanger 42, these may be provided in parallel with one another. However, the plurality of exhaust gas heat exchangers 42 may be collectively in series with the solar collectors 22 and the intermediate heat exchanger 50. As depicted, the exhaust gas heat exchanger 42 may be provided between the intermediate heat exchanger 50 and the solar collectors 22 such that the first working fluid from the intermediate heat exchanger 50 flows into the exhaust gas heat exchanger 42 and then the solar collectors 22. Alternatively, the exhaust gas heat exchangers 42 and solar collectors 22 may be swapped with the first working fluid from the intermediate heat exchanger 50 first flowing through the solar collectors 22 and then the exhaust gas heat exchangers 42.

Any of the features described with reference to Figures 1 to 4 may be combined with any other feature described above. For example, the integrated solar combined cycle power plant 10 may comprise both the heat storage device 60 and supplementary boiler 70. Likewise, the heat storage device 60 and/or supplementary boiler 70 may be provided regardless of whether the exhaust gas heat exchangers 42 are in a series or parallel arrangement.

The first working fluid may be an oil, e.g. a heat transfer oil such as Therminol VP-1 (RTM) heat transfer fluid. The second working fluid may be different from the first working fluid. In particular, the second working fluid may be an organic compound fluid, e.g. a fluid whose molecules contain carbon. For example, the second working fluid may be a refrigerant, such as Cyclopentane. The refrigerant may be one that evaporates at the temperatures and pressures encountered in the intermediate heat exchanger 50. Both the first and second working fluids may be non-aqueous. Avoiding using water as the working fluids is advantageous in regions where water is in short supply, particularly as is often the case where solar collectors are most effective.

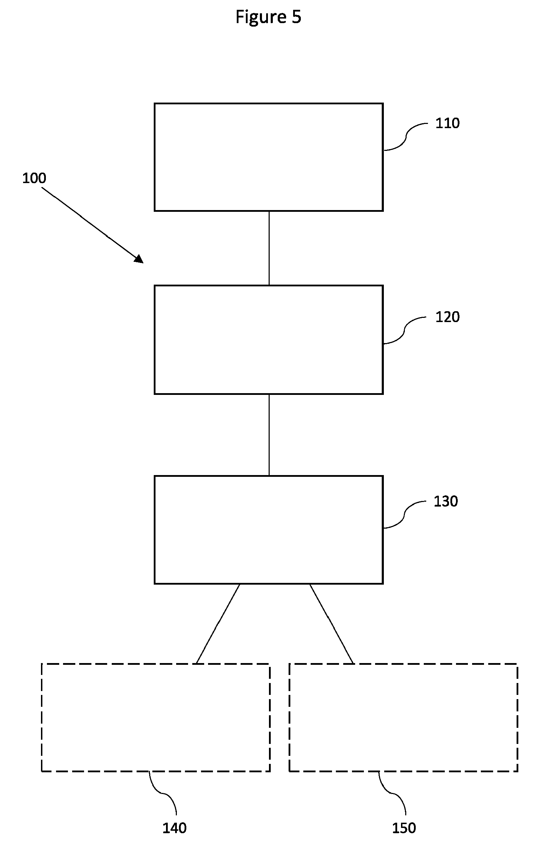

Referring now to Figure 5, a method 100 of operating an integrated solar combined cycle power plant will be described. In a first step 110 heat is transferred from the exhaust gases of the gas turbine power plants 40 via the exhaust gas heat exchangers 42 to the first working fluid flowing in the first thermal circuit 24. In a second step 120 the first working fluid is heated with the one or more solar collectors 22 from the solar power plant 20. In a third step 130 heat is transferred from the first thermal circuit 24 to the organic Rankine cycle via an intermediate heat exchanger 50. The organic Rankine cycle 30 comprises a second thermal circuit 38 with an organic compound based second working fluid flowing therethrough. The second working fluid drives the turbo-generator 32, which in turn generates electricity. The method steps may be carried out in any order or concurrently.

The method 100 may further comprise an additional step 140 in which heat from the first working fluid may be stored in the heat storage device 60. The heat stored in the heat storage device 60 may be subsequently transferred to the first working fluid.

The method 100 may additionally or alternatively comprise a further step 150 in which the supplementary boiler 70 may burn a fossil fuel or a biomass to heat the first working fluid in the first thermal circuit 24. Step 150 may comprise selectively operating the supplementary boiler 70 when the heat collected by the solar collectors 22 is below a threshold rate.

It will be appreciated that the heat exchangers described above may permit heat transfer between the two fluid streams passing through the heat exchanger, but may not otherwise permit mixing between the two streams.

While the invention has been illustrated and described in detail with the help of a preferred embodiment, the invention is not limited to the disclosed examples. Other variations can be deducted by those skilled in the art without leaving the scope of protection of the claimed invention.

## Claims

1. An integrated solar combined cycle power plant (10) comprising a solar power plant (20) and an organic Rankine cycle (30),
wherein the solar power plant (10) comprises one or more solar collectors (22) configured to heat a first working fluid flowing in a first thermal circuit (24),
wherein the organic Rankine cycle (30) comprises a second thermal circuit (38), through which an organic compound based second working fluid flows, and a turbo-generator (32) in the second thermal circuit;
wherein the first thermal circuit (24) is in thermal communication with the second thermal circuit (38) via an intermediate heat exchanger (50) configured to transfer heat from the first working fluid to the second working fluid; and
wherein the integrated solar combined cycle power plant (10) further comprises a gas turbine power plant (40), the exhaust gases from the gas turbine power plant being in thermal communication with an exhaust gas heat exchanger (42) through which the first working fluid flows, the exhaust gas heat exchanger being configured to transfer heat from the gas turbine exhaust gases to the first working fluid.

2. The integrated solar combined cycle power plant (10) of claim 1, wherein the exhaust gas heat exchanger (42) is arranged in parallel with the solar collectors (22) and intermediate heat exchanger (50) within the first thermal circuit (24).

3. The integrated solar combined cycle power plant (10) of claim 1, wherein the exhaust gas heat exchanger (42) is arranged in series with the solar collectors (22) and intermediate heat exchanger (50) within the first thermal circuit (24).

4. The integrated solar combined cycle power plant (10) of any preceding claim, further comprising a heat storage device (60) in fluidic communication with the first thermal circuit (24).

5. The integrated solar combined cycle power plant (10) of claim 4, wherein the heat storage device (60) is in a parallel arrangement with the first thermal circuit (24).

6. The integrated solar combined cycle power plant (10) of any preceding claim, comprising a plurality of gas turbine power plants (40ₙ), wherein the exhaust gases from each gas turbine power plant are in thermal communication with respective exhaust gas heat exchangers (42ₙ) through which the first working fluid flows, the exhaust gas heat exchangers being configured to transfer heat from the gas turbine power plant exhaust gases to the first working fluid.

7. The integrated solar combined cycle power plant (10) of any preceding claim, further comprising a selectively operable supplementary boiler (70) configured to burn at least one of a fossil fuel and biomass, wherein the supplementary boiler is in thermal communication with the first thermal circuit (24) so as to transfer heat to the first working fluid.

8. The integrated solar combined cycle power plant of any preceding claim, wherein the intermediate heat exchanger is configured to vaporise the second working fluid in the second thermal circuit.

9. The integrated solar combined cycle power plant (10) of any preceding claim, wherein the organic Rankine cycle (30) further comprises at least one of a condenser (34) and a pump (36) disposed in the second thermal circuit (38).

10. The integrated solar combined cycle power plant (10) of any preceding claim, wherein the first working fluid is non-aqueous.

11. The integrated solar combined cycle power plant (10) of any preceding claim, wherein the second working fluid is non-aqueous.

12. A method (100) of operating an integrated solar combined cycle power plant (10) comprising a solar power plant (20) and an organic Rankine cycle (30), wherein the method comprises:
transferring heat from the exhaust gases of a gas turbine power plant (40) to a first working fluid flowing in a first thermal circuit (24) via an exhaust gas heat exchanger (42);
heating the first working fluid flowing in the first thermal circuit (24) with one or more solar collectors (22) of the solar power plant (20), and
transferring heat from the first thermal circuit (24) to an organic compound based second working fluid flowing in a second thermal circuit (38) of the organic Rankine cycle (30) via an intermediate heat exchanger (50); the organic Rankine cycle comprising a turbo-generator (32) in the second thermal circuit.

13. The method of claim 12 further comprising:
selectively storing heat from the first working fluid in a heat storage device (60); and
subsequently transferring heat stored in the heat storage device to the first working fluid.

14. The method of claim 12 or 13 further comprising:
selectively operating a supplementary boiler (70) configured to burn at least one of a fossil fuel and biomass; and
transferring heat from the supplementary boiler to the first working fluid in the first thermal circuit (24).

15. The method of claim 14 further comprising:
selectively operating the supplementary boiler (70) when the heat collected by the solar collectors (22) is below a threshold rate.
